# EUROPEAN PATENT APPLICATION

(11) **EP 4 664 640 A1**
(43) Date of publication of application: **17.12.2025**
(21) Application number: 24926171.0
(22) Date of filing: 30.12.2024
(51) Int. Cl.: H01M 50/262, H01M 10/6567, H01M 10/613, H01M 50/204

(54) **BATTERY MODULE AND BATTERY PACK INCLUDING SAME**

(30) Priority: 20.02.2024 KR 20240024294
(71) Applicant: LG Energy Solution, Ltd., Seoul 07335 (KR)
(72) Inventor: LEE, Jung Hoon, Daejeon 34122 (KR); UM, Taeki, Daejeon 34122 (KR)
(74) Representative: Plasseraud IP
(86) International application number: PCT/KR2024/021389
(87) International publication number: WO 2025/178225

(57) **Abstract**

The present disclosure provides a battery module and a battery pack including the same. The battery module according to an embodiment of the present disclosure comprises: a battery cell stack in which a plurality of battery cells including electrode leads are stacked; a fixing frame including both side surface parts and a lower surface part so as to cover both side surfaces and a lower surface of the battery cell stack; a module frame in which the battery cell stack and the fixing frame are housed; and an inlet and an outlet for circulating a coolant into the interior of the module frame, wherein the battery cell stack includes a first battery cell stack and a second battery cell stack arranged along a longitudinal direction in which the electrode leads protrude from the battery cells, wherein the lower surface part of the fixing frame includes a bead surface, with the bead surface being provided with an adhesive member that abuts against the lower ends of the first battery cell stack and the second battery cell stack, and wherein the first battery cell stack and the second battery cell stack are fixed to the fixing frame by the adhesive member.

## Description

### [TECHNICAL FIELD]

### Cross-Reference to Related Application(s)

This application claims priority to and the benefit of Korean Patent Application No. 10-2024-0024294, filed on February 20, 2024, with the Korean Intellectual Property Office, the disclosure of which is incorporated herein by reference in its entirety.

The present disclosure relates to a battery module and a battery pack including the same, and more particularly, to a battery module improved in the cooling performance and enhanced in the fixing force of battery cells and thus improved in the vibration and shock performance of the battery module, and a battery pack including the same.

### [BACKGROUND]

As technology development and demands for mobile devices increase, the demand for secondary batteries as energy sources is rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery module can easily propagate to an adjacent battery module, which may eventually lead to ignition or explosion of the battery pack itself.

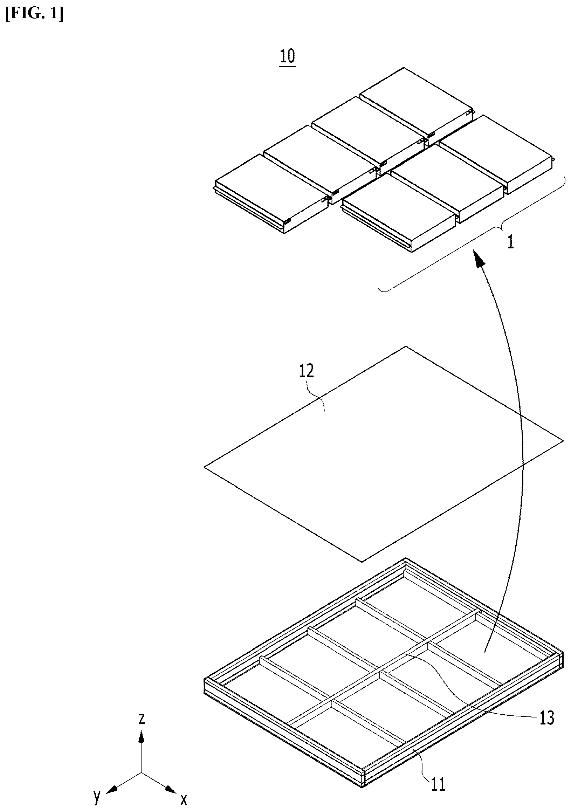

FIG. 1 is an exploded perspective view of a conventional battery pack.

Referring to FIG. 1, a conventional battery pack 10 includes a lower pack frame 11 in which a plurality of battery modules 1 are mounted, an upper pack frame 12 located at an upper part of the battery modules 1, and an internal beam 13 that partitions the positions within the battery pack 10 where the battery modules 1 are mounted.

In this way, when a battery module 1 is mounted within a battery pack 10, the energy density of the battery pack 10 decreases due to the internal beam 13 that partitions between the battery modules 1, and thus, there was a problem that it is necessary to have a larger number of battery packs 10 in order to achieve the efficiency required in the device or the like. Further, due to the weight of the battery pack 10, there was a limit to the number of battery packs 10 that could be equipped in the device. Therefore, it is necessary to install a larger number of battery modules 1 in the battery pack 10 by reducing the weight of the battery pack 10 and at the same time reducing the energy density of the battery pack 10.

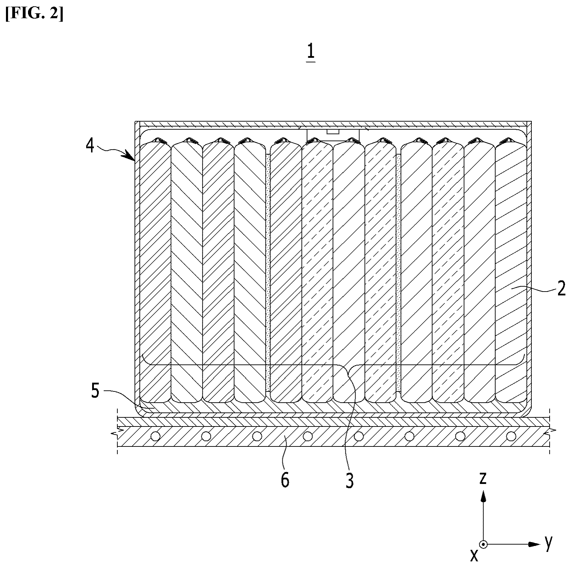

FIG. 2 is a cross-sectional view showing the battery module of FIG. 1.

Referring to FIG. 2, a conventional battery module 1 includes a battery cell stack 3 containing battery cells 2 stacked in a preset direction, and a module frame 4 that houses the battery cell stack 3, wherein the battery cell stack 3 is fixedly located on a thermally conductive resin layer 5 located at a bottom part of the module frame 4. In this case, in order to cool the heat generated from the battery cell stack 3, a heat sink 6 can be provided which is located in the -z-axis direction of FIG. 2 and makes contact with the bottom part of the module frame 4.

However, the heat sink 6 has the disadvantage that its cooling efficiency is not very high because heat is not transferred through direct contact with the battery cell laminate 3, but heat is transferred only through the edges of the battery cells 2. Therefore, there is a need to provide an improved cooling method in order to more effectively cool the battery module 1.

### [DETAILED DESCRIPTION OF THE INVENTION]

### [Technical Problem]

It is an object of the present disclosure to provide a battery module improved in the cooling performance and enhanced in the fixing force of battery cells and thus improved in the vibration and shock performance of the battery module, and a battery pack including the same.

However, the technical objects solved by the embodiments of the present disclosure are not limited to those disclosed above, and may be expanded in various ways within the scope of the technical idea included in the present disclosure.

### [Technical Solution]

A battery module according to an embodiment of the present disclosure comprises: a battery cell stack in which a plurality of battery cells including electrode leads are stacked; a fixing frame including both side surface parts and a lower surface part so as to cover both side surfaces and a lower surface of the battery cell stack; a module frame in which the battery cell stack and the fixing frame are housed; and an inlet and an outlet for circulating a coolant into the interior of the module frame. The battery cell stack includes a first battery cell stack and a second battery cell stack arranged along a longitudinal direction in which the electrode leads protrude from the battery cells. The lower surface part of the fixing frame includes a bead surface, with the bead surface being provided with an adhesive member that abuts against the lower ends of the first battery cell stack and the second battery cell stack, and the first battery cell stack and the second battery cell stack are fixed to the fixing frame by the adhesive member.

The first battery cell stack and the second battery cell stack may be located between the inlet and the outlet.

The inlet, the first battery cell stack, the second battery cell stack, and the outlet may be sequentially located along the longitudinal direction, which is perpendicular to the direction between the both side surface parts of the fixing frame.

The bead surface may be an area protruding in the direction in which the battery cell stack is located from the lower surface part, and an area other than the bead surface among the lower surface part of the fixing frame may be a flow path through which a coolant flows.

The pattern of the bead surface may be formed so that, based on each of the battery cells, an area of 20% or more and 40% or less of the lower surface of the battery cell makes contact with the adhesive member.

The bead surface includes at least one line-shaped bead surface, and the line-shaped bead surface may have a diagonal area that extends obliquely by forming an acute angle to the longitudinal direction.

The bead surface may include a block-shaped bead surface.

The line-shaped bead surface may be formed in a plurality of numbers, and the block-shaped bead surface may be located between the line-shaped bead surfaces.

The block-shaped bead surface may be located between the line-shaped bead surface and the side surface part of the fixing frame.

The bead surface may comprise: a first bead formed to extend in the longitudinal direction; a second bead formed to extend in the longitudinal direction; a third bead located between the first bead and the second bead; a fourth bead located between a side surface part closer to the first bead among both side surface parts of the fixing frame, and the first bead; and a fifth bead located between a side surface part closer to the second bead among both side surface parts of the fixing frame, and the second bead.

The third bead may be located in the center with respect to the both side surface parts of the fixing frame, and the first bead and the second bead may be symmetrical with respect to the third bead.

The third bead may be located in the center with respect to the both side surface parts of the fixing frame, and the fourth bead and the fifth bead may be symmetrical with respect to the third bead.

According to an embodiment of the present disclosure, there is provided a battery pack comprising the battery module.

### [Advantageous Effects]

According to embodiments of the present disclosure, each battery module can be electrically connected to improve the energy density of the battery pack. In addition, the upper and lower surfaces of the battery cells can be cooled more effectively, thereby improving the cooling efficiency and ensuring the safety of the battery module and the battery pack.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is an exploded perspective view of a conventional battery pack.
FIG. 2 is a cross-sectional view showing the battery module of FIG. 1.
FIG. 3 is a perspective view showing a battery module according to an embodiment of the present disclosure.
FIG. 4 is a perspective view showing a first battery cell stack, a first busbar frame assembly, and the like as components included in a battery module according to an embodiment of the present disclosure.
FIG. 5 is an exploded perspective view showing a first battery cell stack, a first busbar frame assembly, and a flexible printed circuit board.
FIG. 6 is a perspective view showing a battery cell stack included in a battery module according to an embodiment of the present disclosure.
FIG. 7 is an exploded perspective view in which a fixing frame is added to FIG. 6.
FIG. 8 is a perspective view showing the lower part of FIG. 7 at different angles so that the downside part is made visible.
FIG. 9 is a diagram showing a state where FIG. 7 is inserted into a module frame.
FIG. 10 is a perspective view showing a state where a coolant is located in a battery module.
FIG. 11 is a plan view showing a state where the upper end part of the module frame is omitted in a battery module according to an embodiment of the present disclosure when viewed from above.
FIG. 12 is a perspective view of a fixing frame according to an embodiment of the present disclosure.
FIG. 13 is a plan view of the fixing frame of FIG. 12.
FIG. 14 is a plan view of a fixing frame according to a comparative example of the present disclosure.
FIG. 15 is a plan view of a fixing frame according to another embodiment of the present disclosure.
FIG. 16 is a plan view of a fixing frame according to another embodiment of the present disclosure.
FIG. 17 is a plan view of a fixing frame according to another embodiment of the present disclosure.
FIG. 18 is a plan view of a fixing frame according to another embodiment of the present disclosure.
FIG. 19 is an exploded perspective view of a battery pack according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

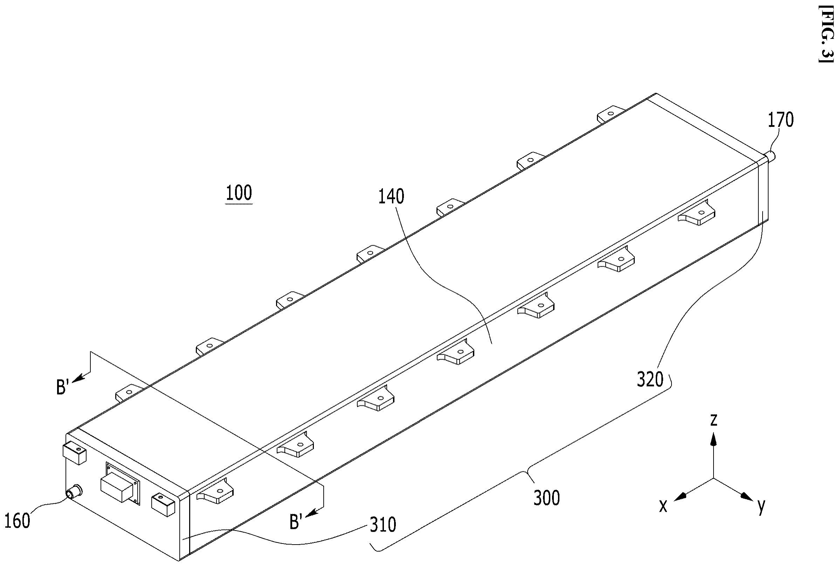

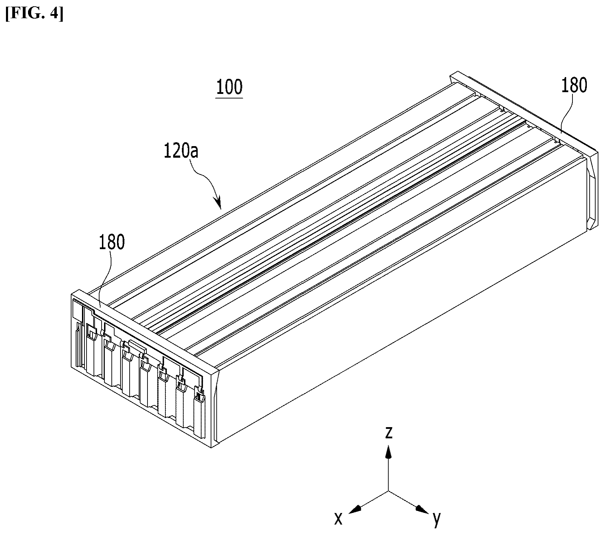

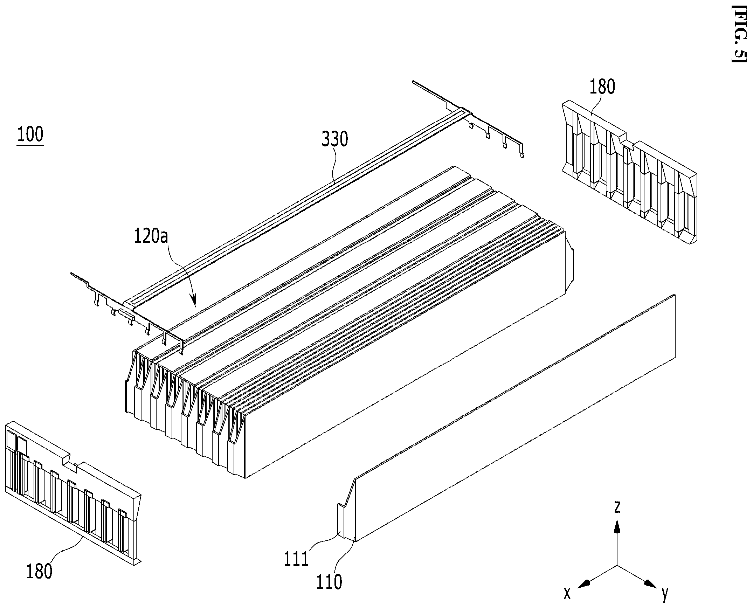

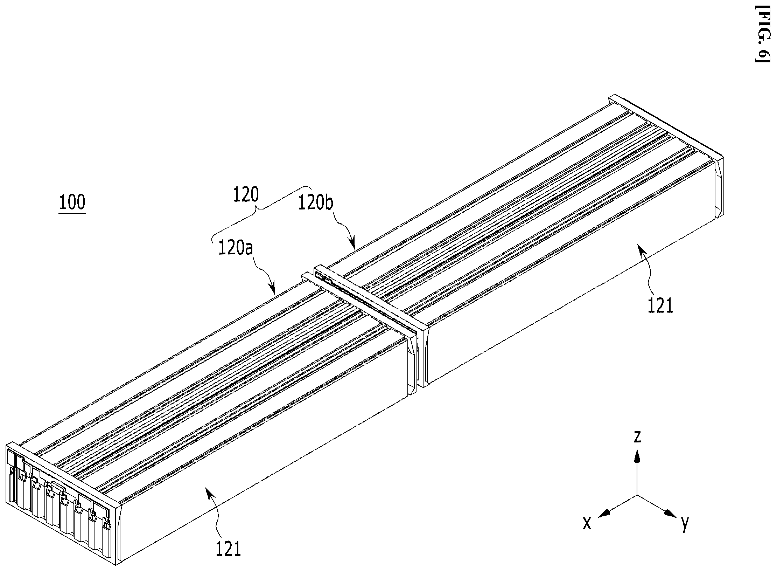

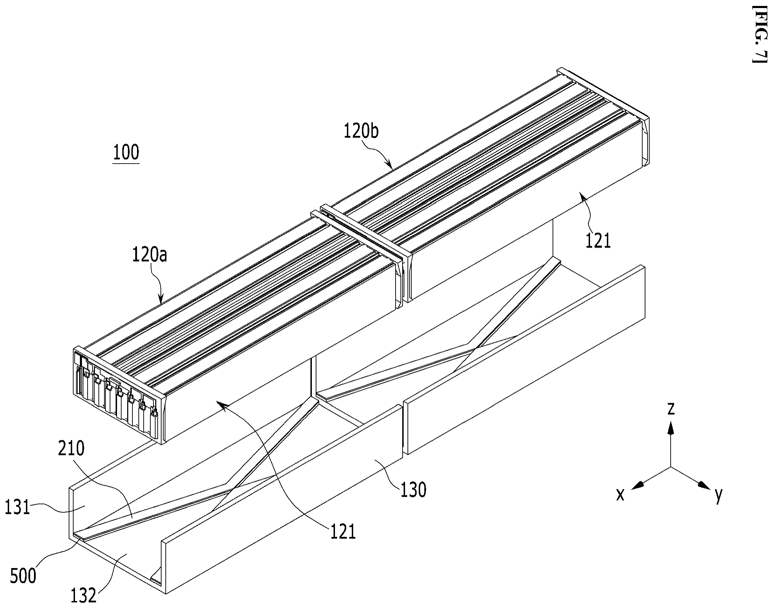

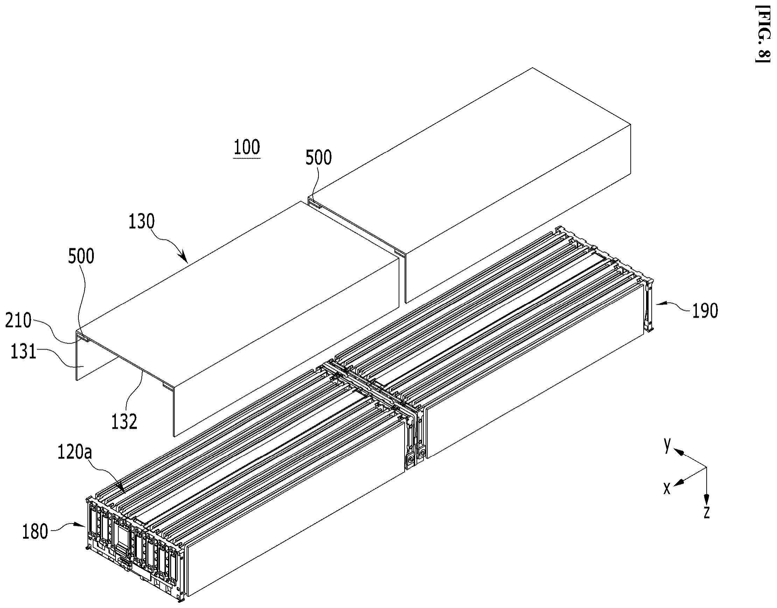

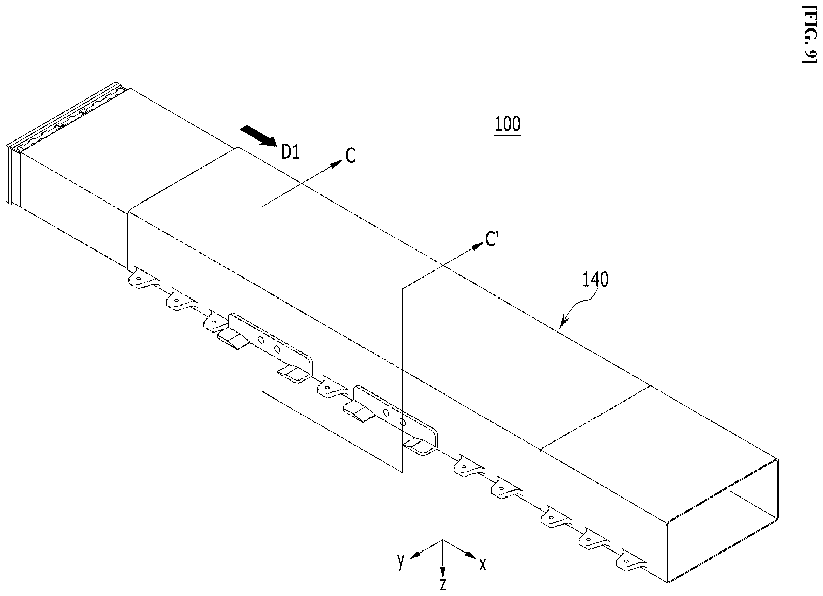

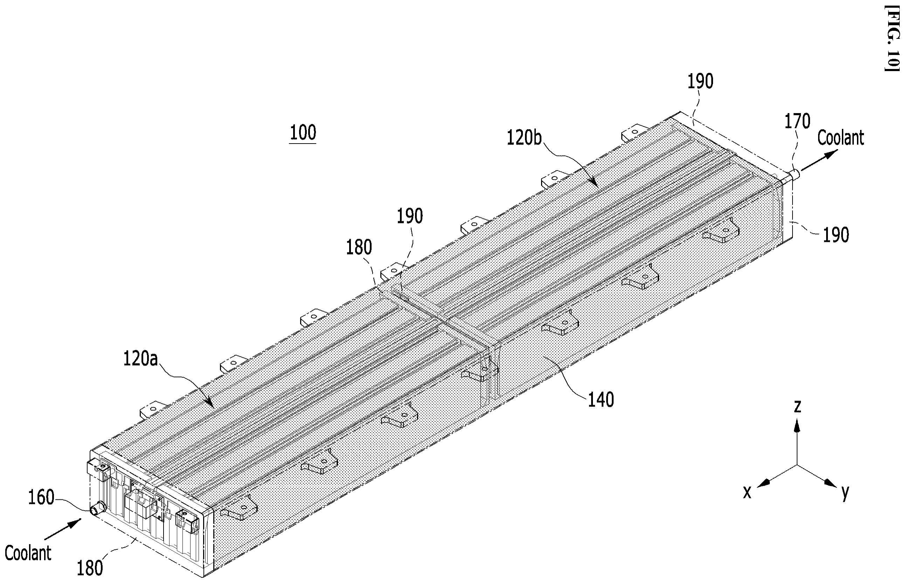

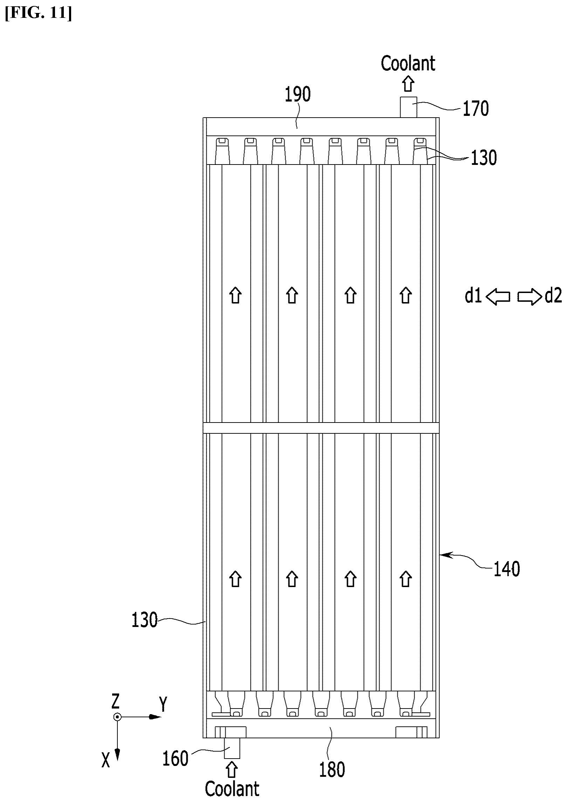

FIG. 3 is a perspective view showing a battery module 100 according to an embodiment of the present disclosure. FIG. 4 is a perspective view showing a first battery cell stack 120a, a first busbar frame assembly 180, and a flexible printed circuit board 330 as components included in a battery module 100 according to an embodiment of the present disclosure. FIG. 5 is an exploded perspective view showing a first battery cell stack 120a, a first busbar frame assembly 180, and a flexible printed circuit board 330. FIG. 6 is a perspective view showing a battery cell stack 120 included in a battery module according to an embodiment of the present disclosure. FIG. 7 is an exploded perspective view in which a fixing frame 130 is added to FIG. 6. FIG. 8 is a perspective view showing the lower part of FIG. 7 at different angles so that the downside part is made visible. FIG. 9 is a diagram showing a state where FIG. 7 is inserted into a module frame. FIG. 10 is a perspective view showing a state where a coolant is located in a battery module 100. FIG. 11 is a plan view showing a state where the upper end part of the module frame 140 is omitted in a battery module 100 according to an embodiment of the present disclosure when viewed from above.

Referring to FIGS. 3 to 11, a battery module 100 according to an embodiment of the present disclosure includes a battery cell stack 120 in which a plurality of battery cells 110 including electrode leads 111 are stacked. The battery module 100 includes a fixing frame 130 including both side surface parts 131 and a lower surface part 132 so as to cover both side surfaces and a lower surface of the battery cell stack 120; a module frame 140 in which the battery cell stack 120 and the fixing frame 130 are housed; and an inlet 160 and an outlet 170 for circulating a coolant into the interior of the module frame 140.

First, the battery cell 110 may be a pouch-type battery cell. The pouch-type battery cell may be formed by housing an electrode assembly in a pouch case made of a laminate sheet including a resin layer and a metal layer, and then heat-fusing the sealing part of the pouch case. In this case, the battery cell 110 may be formed in a rectangular sheet-like structure.

Such battery cells 110 may be formed in a plurality of numbers, and the plurality of battery cells 110 are stacked so as to be electrically connected to each other, thereby forming a battery cell stack 120. In particular, a plurality of battery cells 110 may be stacked along a direction parallel to the y-axis as shown in FIG.4. As mentioned above, the direction in which the plurality of battery cells 110 are stacked may be defined as the width direction of the battery cell stack 120.

The fixing frame 130 may be located while covering at least one surface of the battery cell stack 120. The fixing frame 130 may be located while covering the lower part of the battery cell stack 120, and specifically, the fixing frame 130 may be located while covering the lower surface and a part of the side surface of the battery cell stack 120.

The module frame 140 can be intended to protect the battery cell stack 120 and electrical components connected thereto from external physical impacts. The module frame 140 may house the battery cell stack 120 and electrical components connected thereto in the internal space of the module frame 140.

The structure of the module frame 140 may have various shapes. According to the present embodiment, the structure of the module frame 140 may be a mono frame structure. Here, the mono frame may be in the form of a metal plate in which the upper surface, lower surface, and both side surfaces are integrated. The mono frame can be manufactured by extrusion molding.

However, the structure of the module frame 140 is not limited thereto, and in another example, the module frame 140 may have a structure in which a U-shaped frame and an upper plate are coupled. In this case, the U-shaped frame may be formed such that the lower surface and both side surfaces of the module frame 140 are coupled and integrated. At this time, each frame or plate constituting the U-shaped frame may be manufactured by press molding. Further, the structure of the module frame 140 may be provided in a mono frame or an L-shaped frame structure in addition to a U-shaped frame, and may be provided in various structures that are not described in the above-mentioned examples.

The module frame 140 may be provided in a form in which the front and rear sides are open along the longitudinal direction (x-axis direction). Here, the longitudinal direction may be a direction in which the electrode lead 111 protrudes from the battery cell 110, as will be described later. Further, the longitudinal direction may be a direction perpendicular to the width direction of the battery cell stack 120 described above. The longitudinal direction may be a direction parallel to the x-axis, and the width direction may be a direction parallel to the y-axis. In this case, the front surface and the rear surface of the battery cell stack 120 may be opened without being covered by the module frame 140. The front surface and the rear surface of the battery cell stack 120 may be covered by busbar frame assemblies 180 and 190, and the like, through which the front surface and the rear surface of the battery cell stack 120 will be able to be protected from external physical impacts or the like.

In particular, referring to FIGS. 10 and 11, in the battery module 100 according to the present embodiment, the coolant may be flowed into the module frame 140 through the inlet 160 and then discharged to the outside of the battery module 100 through the outlet 170. In this case, the coolant may be a fluid. However, the coolant needs to be electrically insulated because it is in direct contact with the battery cell stack 120, other electrical components, and the busbar frame assemblies 180 and 190 within the battery module 100. Therefore, the coolant may be a material that has insulating properties. In one example, the coolant may be insulating oil.

In a first direction d1 and a second direction d2 which are parallel to the direction in which the battery cells 110 are stacked and which are opposite to each other, the inlet 160 may be positioned biased in the first direction d1 from the center of the battery cell stack 120 in the direction in which the battery cells 110 are stacked. The outlet 170 may be disposed biased in the second direction d2 from the central part of the battery cell stack 120 in the direction in which the battery cells 110 are stacked. That is, the inlet 160 and the outlet 170 are preferably disposed on opposite sides with respect to the direction in which the battery cells 110 are stacked. The inlet 160 and the outlet 170 must be disposed in this manner, so that the coolant can flow throughout the whole space inside the module frame 140 and evenly cool all the battery cells 110. If both the inlet 160 and the outlet 170 are disposed at the central part of the battery cell stack 120 in the direction in which the battery cells 110 are stacked, the coolant will flow only to the central part, which is the portion where the flow resistance is smallest, so the coolant does not flow well to the battery cells 110 located at the outer part of the battery cell stack 120. Ultimately, his results in cooling imbalance inside the battery module 100. In addition, if both the inlet 160 and the outlet 170 are disposed biased toward to either side of the first direction d1 or the second direction d2, the coolant will flow only to some of the outer battery cells 110 adjacent to the biased direction, so that a cooling imbalance will also occur inside the battery module 100. Therefore, in order to guide so that the coolant flows evenly through all of the battery cells 110 inside the battery module 100, the inlet 160 and the outlet 170 are preferably disposed on opposite sides to each other based on the direction in which the battery cells 110 are stacked, as mentioned above.

The end plate 300 may be disposed on an open first side (x-axis direction) and an open second side (-x-axis direction) of the module frame 140. The end plate 300 disposed on the open first side of the module frame 140 may be a first end plate 310, and the end plate 300 disposed on the open second side of the module frame 140 may be a second end plate 320. The end plate 300 can physically protect the battery cell stack 120 and other electrical components from external impacts.

The inlet 160 may be a hole including a protrusion part that protrudes in a direction opposite to an area where the module frame 140 is arranged. The protrusion part may be located while passing through an inlet opening (not shown) formed in the first end plate 310. The outlet 170 may be a hole including a protrusion part that protrudes in a direction opposite to an area where the module frame 140 is arranged. The protrusion part may be located while passing through an outlet opening (not shown) formed in the second end plate 320. However, this structure is only one example of the inlet and outlet in the present disclosure, and the shape of the inlet and outlet is not particularly limited as long as it can flow a coolant into the interior of the module frame 140 and discharge the coolant from the module frame 140.

Referring again to FIGS. 4 to 8, 10 and 11, a battery module 100 according to an embodiment of the present disclosure may further include a first busbar frame assembly 180 provided on one side of a first battery cell stack 120a; and a second busbar frame assembly 190 provided on one side of a second battery cell stack 120b.

The busbar frame assemblies 180 and 190 may be located on the open first side (x-axis direction) and second side (-x-axis direction) of the module frame 140, and can be formed to cover the battery cell stack 120. The busbar frame assemblies 180 and 190 may electrically connect the battery cells 110 constituting the battery cell stack 120 in series or in parallel.

The battery module 100 according to the present embodiment may be formed by electrically connecting the first battery cell stack 120a and the second battery cell stack 120b to each other along the longitudinal direction (x-axis direction) of the battery cell 110. For this purpose, the busbar frame assemblies 180 and 190 may also be located between the first battery cell stack 120a and the second battery cell stack 120b. Specifically, the first busbar frame assembly 180 located at the other end of the first battery cell stack 120a and the second busbar frame assembly 190 located at one end of the second battery cell stack 120b may be electrically connected to form the battery module 100 according to the present embodiment.

The busbar frame assemblies 180 and 190 may include an electrically insulating material.

Meanwhile, a flexible printed circuit board 330 that electrically connects the first busbar frame assembly 180 and the second busbar frame assembly 190 may be provided. The flexible printed circuit board 330 is mounted to extend in the longitudinal direction of the battery cells 110 and configured to sense the battery cells 110. That is, as shown in FIG. 5, the flexible printed circuit board 330 is located on the upper surface of the battery cell stack 120 and senses voltage data or thermal data of the battery cells 110. In particular, the flexible printed circuit board 330 may be electrically connected while being bent toward the busbar frame assemblies 180 and 190 at one end. Accordingly, the voltage data of each battery cell 110 can be sensed and transmitted to the outside.

Referring again to FIGS. 6 to 8 and 10, the battery cell stack 120 includes a first battery cell stack 120a and a second battery cell stack 120b arranged along the longitudinal direction in which the electrode leads 111 protrude from the battery cells 110.

Specifically, the battery module 100 of the present embodiment may be one in which one end and the other end of each battery cell stack 120 constituting two conventional battery modules 100 are electrically connected. In other words, the first battery cell stack 120a and the second battery cell stack 120b may be electrically coupled. As mentioned above, the battery module 100 according to the present embodiment has an immersion cooling structure in which a coolant directly cools the battery cells 110 to enhance cooling performance. However, the immersion cooling structure requires an inlet 160 and an outlet 170 for each battery module 100, which is disadvantageous in terms of energy density. In order to compensate for a factor for decreasing energy density due to this immersion cooling structure, the battery module 100 according to the present embodiment has a long module structure in which at least two battery cell stacks 120a and 120b are arranged on one module frame 140.

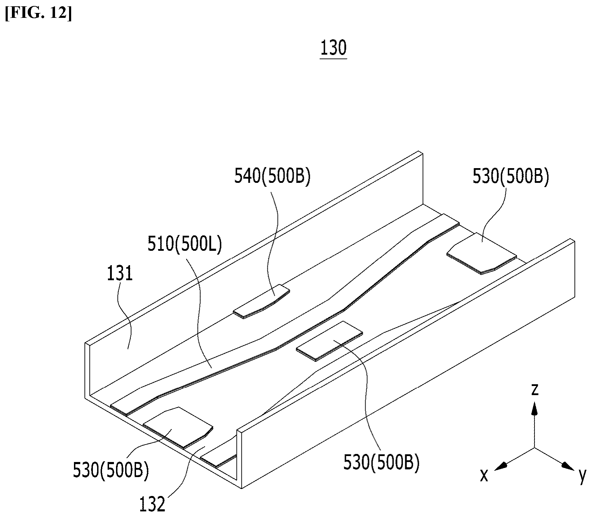

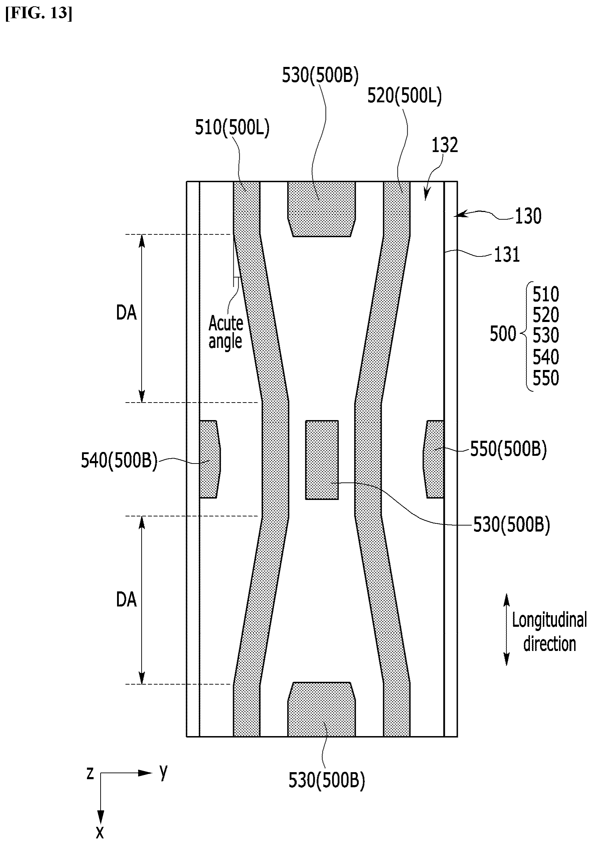

FIG. 12 is a perspective view of a fixing frame 130 according to an embodiment of the present disclosure. FIG. 13 is a plan view of the fixing frame 130 of FIG. 12.

Referring to FIGS. 6 to 8, 10, 12 and 13, the fixing frame 130 according to the present embodiment includes side surface parts 131 that cover each of both side surfaces of the battery cell stack 120, and a lower surface part 132 that covers the lower surface of the battery cell stack 120.

The lower surface part 132 of the fixing frame 130 includes a bead surface 500, wherein the bead surface 500 is provided with an adhesive member 210 which abuts against the lower ends of the first battery cell stack 120a and the second battery cell stack 120b. The first battery cell stack 120a and the second battery cell stack 120b are fixed to the fixing frame 130 by the adhesive member 210.

The bead surface 500 may be an area where a part of the lower surface part 132 of the fixing frame 130 protrudes in the direction in which the battery cell stack 120 is located, i.e., in an upward direction. An adhesive member 210 may be applied onto the bead surface 500 protruding in an upward direction.

The fixing frame 130 is formed of a material having rigidity, and can serve to protect the battery cell stack 120 from external physical impact, and to firmly fix and support them within the module frame 140.

In the case of the immersion cooling structure, an airtight structure that seals the coolant so that it does not leak to the outside of the battery module 100 is essential. This airtight structure can be realized by housing the battery cells 110 in the internal space formed by the module frame 140 and the end plate 300, but in this case, there is a problem that the battery cells 110 are not properly fixed inside the module frame 140. Thus, in the battery module 100 having the immersion cooling structure, the present embodiment has realized a fixing structure using a fixing frame 130 in order to fix the battery cells 110 and maintain a stable stacked structure of the battery cells 110. However, if an adhesive member is provided on the whole of the lower surface part 132 of the fixing frame 130, there is a concern that the lower surface of the battery cell stack 120 may not make contact with the coolant, which may result in deterioration of cooling performance. Therefore, in order to secure a certain degree of cooling area on the lower surface of the battery cell stack 120 while fixing the battery cells 110, a bead surface 500 protruding upward is provided in a part of the lower surface part 132 of the fixing frame 130. That is, in the area where the bead surface 500 is not formed, the coolant can come into direct contact with the lower surface of the battery cell stack 120 and cool the lower part of the battery cells 110.

The adhesive member 210 refers collectively to a member having adhesive properties in order to for fix the battery cells 110. As an example, the adhesive member 210 may be a sticky type adhesive, a double-sided tape or a chemical adhesive that is bonded through a chemical reaction when adhering to the bead surface 500 provided on the lower surface part 132 of the fixing frame 130. The stacked structure of the first battery cell stack 120a and the second battery cell stack 120b can be maintained by the adhesive member 210.

In another embodiment, the adhesive member 210 may be an insulating tape. In yet another embodiment, the adhesive members 210 may be formed of a resin. For example, the adhesive members 210 may be formed of a resin or the like. When the adhesive members 210 make contact with other components, they can be coupled with other components while being subsequently cured, thereby fixing and supporting them.

Therefore, the adhesive strength between the first battery cell stack 120a and the second battery cell stack 120b, and the fixing frame 130 can be made stronger. In this case, even when an impact is applied to the battery module 100 from the outside, the first battery cell stack 120a and the second battery cell stack 120b do not separate or detach from the fixing frame 130, thereby improving the safety and mechanical reliability of the battery.

An adhesive member 210 that abuts against the lower part of the battery cell stack 120 is applied onto a part or the whole area of the bead surface 500.

Meanwhile, referring again to FIGS. 10 and 11, the first battery cell stack 120a and the second battery cell stack 120b may be located between the inlet 160 and the outlet 170. More specifically, the inlet 160, the first battery cell stack 120a, the second battery cell stack 120b, and the outlet 170 may be sequentially located along the longitudinal direction, which is perpendicular to the direction between the both side surface parts 131 of the fixing frame 130.

The first battery cell stack 120a and the second battery cell stack 120b must be arranged between the inlet 160 and the outlet 170, so that the coolant can maintain a one-way flow within the battery module 100. The coolant flowing in through the inlet 160 can pass through the first battery cell stack 120a and the second battery cell stack 120b in sequence and be discharged through the outlet 170. That is, the coolant can flow throughout the whole space inside the module frame 140 and evenly cool all the battery cells 110.

The coolant can directly cool the battery cell stack 120 and other electrical components that generate heat within the battery module 100 as well as the busbar frame assemblies 180 and 190, by directly contacting them and receiving transfer of heat. Therefore, compared to a method of indirectly cooling the battery module 100 using a heat sink as in a conventional case (FIGS. 2 and 6), the cooling efficiency can be improved, and thus the lifetime of the battery can be extended. Referring again to FIGS. 12 and 13, the bead surface 500 is an area that protrudes in the direction where the battery cell stack 120 is located from the lower surface part 132 of the fixing frame 130, and an area other than the bead surface 500 among the lower surface part 132 of the fixing frame 130 can be a flow path through which the coolant flows.

Since the coolant flows in an area other than the bead surface 500 among the lower surface part 132 of the fixing frame 130, the coolant can come into direct contact with the lower surface of the battery cell stack 120 fixed to the fixing frame 130. Thereby, the cooling performance of the battery cell 110 can be improved.

The pattern of the bead surface 500 can be formed so that, based on each of the battery cells 110, an area of 20% or more and 40% or less of the lower surface of the battery cell 110 makes contact with the adhesive member 210.

As mentioned above, the area other than the bead surface 500 among the lower surface part 132 of the fixing frame 130 may be a flow path for the coolant. In this case, if an area of 20% or more and 40% or less of the lower surface of the battery cell 110 makes contact with the adhesive member 210, an area of 60% or more and 80% or less of the lower surface of the battery cell 110 may come into direct contact with the coolant.

The ratio of the area that makes contact with the adhesive member 210 among the lower surface area of the battery cell 110 can be determined based on the capacity of the battery cell 110, the size of the battery module 100, and the like. The ratio of the area that makes contact with the adhesive member 210 among the lower surface area of the battery cell 110 can be adjusted, so that the cooling performance of the battery module 100 can be managed and designed as intended.

Referring again to FIG. 13, the bead surface 500 includes at least one line-shaped bead surface 500L, and the line-shaped bead surface 500L can have a diagonal area DA extends obliquely by forming an acute angle to the longitudinal direction.

The diagonal area DA serves to guide the flow of coolant from the inlet 160 to the outlet 170. In addition, by introducing the diagonal area DA, it is possible to adjust the ratio of the area that makes contact with the adhesive member 210 among of the lower surface area of the battery cell 110.

Although not shown in FIG. 13, the adhesive member 210 that about against the lower surface of the battery cell stack 120 is applied onto a part or the whole area of the bead surface 500.

An area of 20% to 40% of the lower surface of the battery cell 110 may make contact with the bead surface 500, but is not limited to 20% to 40%.

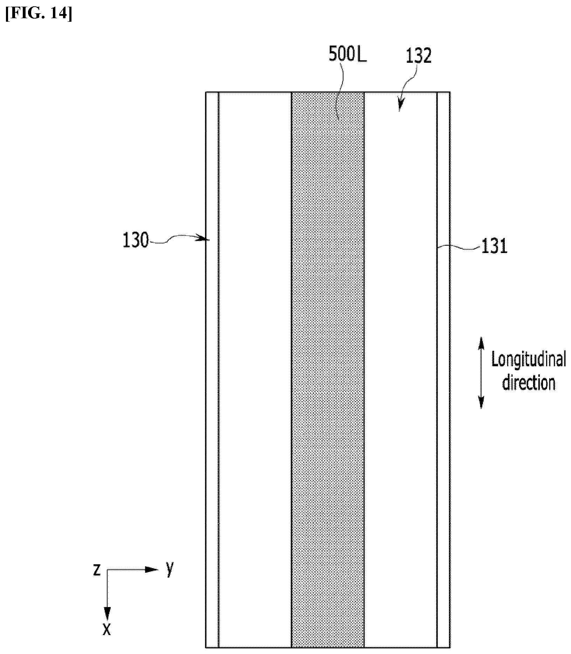

FIG. 14 is a plan view of a fixing frame 130 according to a comparative example of the present disclosure.

As shown in FIG. 14, when a line-shaped bead surface 500L, which is a straight line, is applied to the lower surface part 132 of the fixing frame 130, the lower surface of the battery cell 110 that abuts against the adhesive member 210 provided on the line-shaped bead surface 500L among several battery cells 110 is attached to the adhesive member 210 over a whole surface, not an area of not less than 20% and not more than 40%. In this case, the lower surface of the battery cell 110 does not make contact with the coolant at all, so the cooling performance for the battery cell 110 is reduced. Since the degree of cooling for the battery cells 110 becomes different, it causes non-uniform cooling between the battery cells 110, which may lead to a decrease in the performance of the battery module.

On the other hand, in the case of the present embodiment shown in FIG. 13, the line-shaped bead surface 500L has a diagonal area DA, so that each of all the battery cells 110 can be adjusted to contact the bead surface 500 over an area of 20% or more and 40% or less. This can make it possible to uniformly cool the battery cells 110, and prevent performance degradation of the battery module due to non-uniform cooling.

Meanwhile, the bead surface 500 may include a block-shaped bead surface 500B in addition to the line-shaped bead surface 500L. The block-shaped bead surface 500B may be located between the line-shaped bead surfaces 500L.

The block-shaped bead surface 500B may be formed in a single or a plurality of numbers. The line-shaped bead surface 500L may be formed in a single or a plurality of numbers. The bead surface 500 may include both the block-shaped bead surface 500B and the line-shaped bead surface 500L. The line-shaped bead surface 500L and the block-shaped bead surface 500B may be appropriately arranged, so that each of all the battery cells 110 may be set to contact the adhesive member 210 over an area of 20% or more and 40% or less. However, in another embodiment, the bead surface 500 may include only any one of the block-shaped bead surface 500B and the line-shaped bead surface 500L.

The position and size of the block-type bead surface 500B can be determined according to the temperature distribution of the battery cell stack 120 when charging/discharging for the battery cell 110. In particular, since the area of the lower surface part 132 of the fixing frame 130 other than the block-shaped bead surface 500B may be a flow path through which a coolant flows, the position, size, number, and the like of the block-shaped bead surface 500B may be determined according to the shape, and the like of the coolant flow path.

More specifically, the bead surface 500 according to the present embodiment may include: a first bead 510 formed to extend in the longitudinal direction; a second bead 520 formed to extend in the longitudinal direction; a third bead 530 located between the first bead 510 and the second bead 520; a fourth bead 540 located between a side surface part 131 closer to the first bead 510 among both side surface parts 131 of the fixing frame 130, and the first bead 510; and a fifth bead 550 located between a side surface part 131 closer to the second bead 520 among both side surface parts 131 of the fixing frame 130, and the second bead 520.

All embodiments of the line-shape bead surface 500L described in this specification are satisfactory if the bead surface 500 extends from one end to the other end of the fixing frame 130 in the longitudinal direction, as shown in FIG. 13, and does not always need to be a straight line. That is, the line-shaped bead surface 500L may include a diagonal area DA.

The third bead 530 may be located in the center with respect to both side surface parts 131 of the fixing frame 130, and the first bead 510 and the second bead 520 may be symmetrical with respect to the third bead 530.

Meanwhile, although not shown in FIG. 13, an adhesive member 210 that abuts against the lower end of the battery cell stack 120 is applied onto a part or the whole area of the bead surface 500.

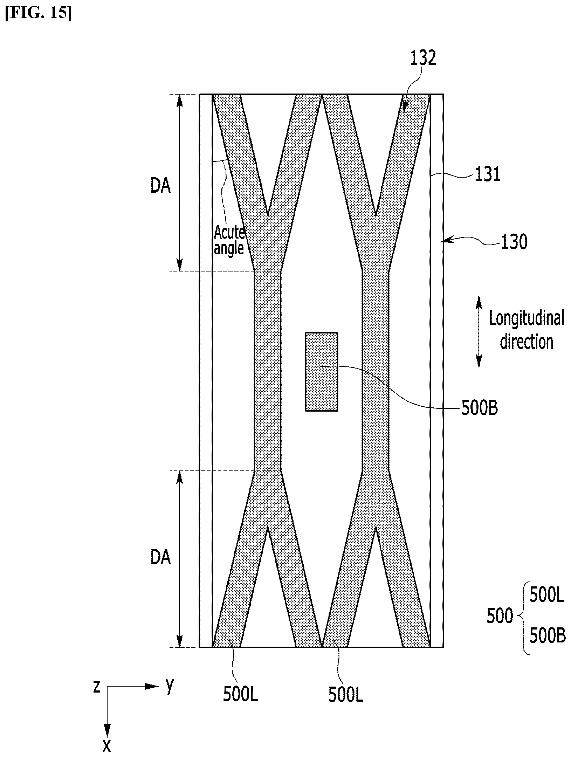

FIG. 15 is a plan view of a fixing frame 130 according to another embodiment of the present disclosure.

Referring to FIG. 15, the line-shaped bead surface 500L may be divided into one or more branches as shown in FIG. 15.

Although not shown in FIG. 15, an adhesive member 210 that abuts against the lower part of the battery cell stack 120 may be applied onto a part or the whole area of the bead surface 500. An area of 20% or more and 40% or less of the lower surface of the battery cell 110 may make contact with the bead surface 500, but is not limited to 20% or more and 40% or less.

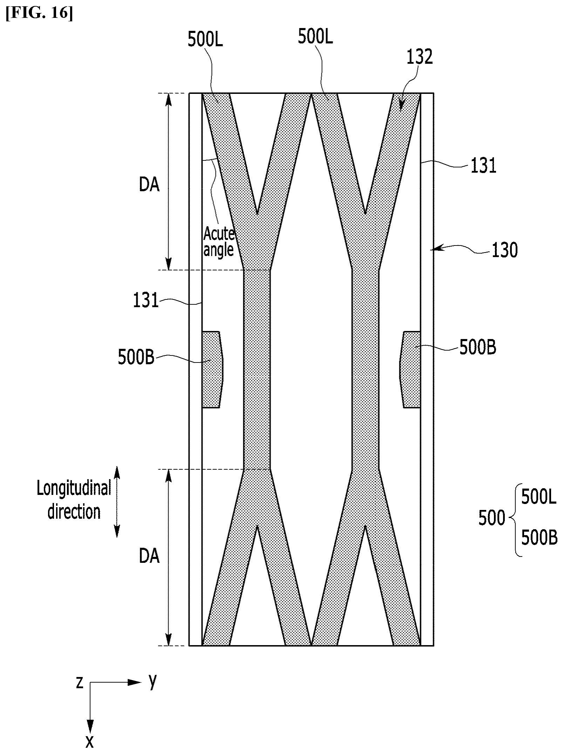

FIG. 16 is a plan view of a fixing frame 130 according to another embodiment of the present disclosure.

Referring to FIG. 16, the block-shaped bead surface 500B may be located between the line-shaped bead surface 500L and the side surface part 131 of the fixing frame 130.

As shown in FIG. 16, the line-shaped bead surface 500L may be divided into one or more branches. Although not shown in FIG. 16, an adhesive member 210 that abuts against the lower part of the battery cell stack 120 is applied onto a part or the whole area of the bead surface 500. An area of 20% or more and 40% or less of the lower surface of the battery cell 110 may make contact with the bead surface 500, but is not limited to 20% or more and 40% or less.

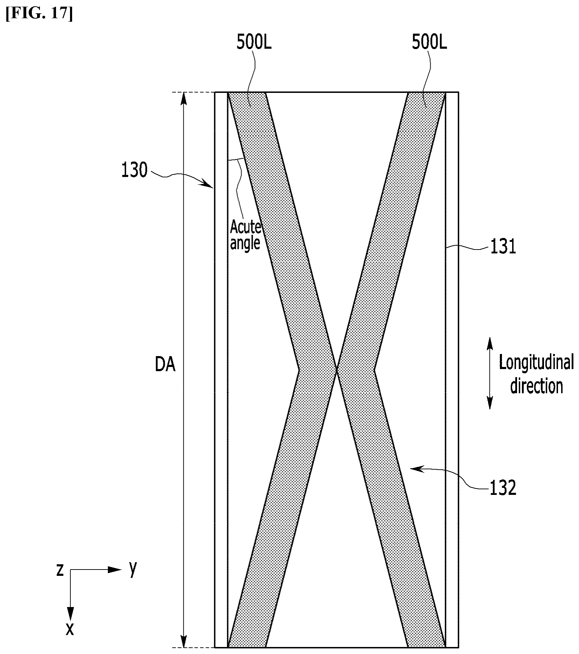

FIG. 17 is a plan view of a fixing frame 130 according to another embodiment of the present disclosure.

Referring to FIG. 17, the bead surface 500L according to the present embodiment may extend along the longitudinal direction, but the whole area of the bead surface 500L may be a diagonal area DA.

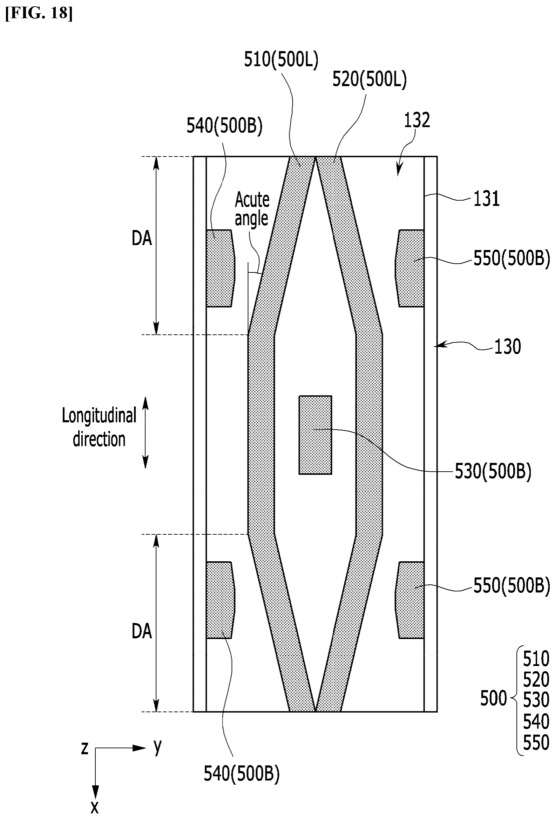

FIG. 18 is a plan view of a fixing frame 130 according to another embodiment of the present disclosure.

Referring to FIG. 18, the bead surface 500 according to the present embodiment may include: a first bead 510 formed to extend in the longitudinal direction; a second bead 520 formed to extend in the longitudinal direction; a third bead 530 located between the first bead 510 and the second bead 520; a fourth bead 540 located between a side surface part 131 closer to the first bead 510 among both side surface parts 131 of the fixing frame 130, and the first bead 510; and a fifth bead 550 located between a side surface part 131 closer to the second bead 520 among both side surface parts 131 of the fixing frame 130, and the second bead 520.

All embodiments of the line-shaped bead surface 500L described in this specification are satisfactory if the bead surface 500 extends from one end to the other end of the fixing frame 130 in the longitudinal direction, as shown in FIG. 18, and does not always have to be a straight line. That is, the line-shaped bead surface 500L may include a diagonal area DA.

The third bead 530 may be located in the center with respect to the both side surface parts 131 of the fixing frame 130, and the first bead 510 and the second bead 520 may be symmetrical with respect to the third bead 530. In addition, the fourth bead 540 and the fifth bead 550 may be symmetrical with respect to the third bead 530.

Although not shown in FIG. 18, an adhesive member 210 that abuts against the lower part of the battery cell stack 120 is applied onto a part or the whole area of the bead surface 500.

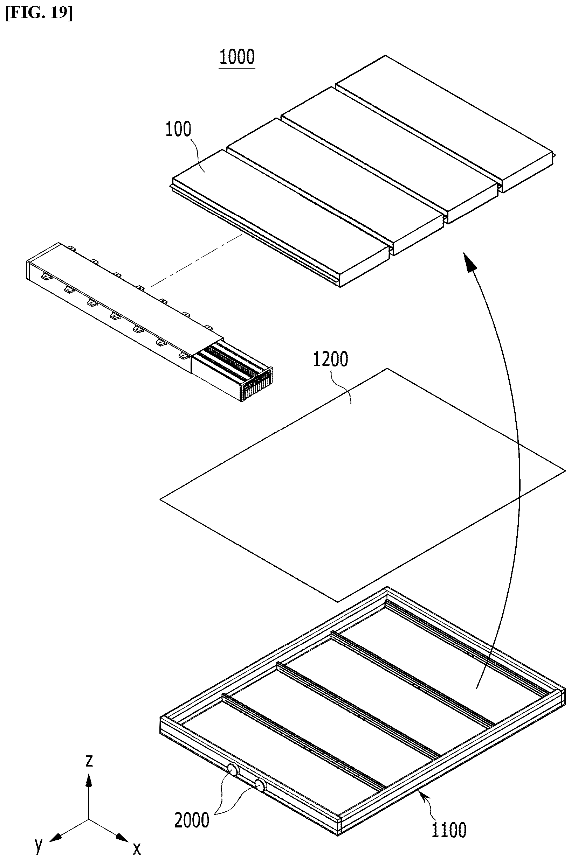

FIG. 19 is an exploded perspective view of a battery pack 1000 according to an embodiment of the present disclosure.

Referring to FIG. 19, according to an embodiment of the present disclosure, a battery pack 1000 comprising the battery module 100 is provided.

The battery pack 1000 according to an embodiment of the present invention may include: a lower pack frame 1100 on which a plurality of battery modules 100 are mounted, an upper pack frame 1200 located at an upper part of the battery modules 100, and at least one venting part 2000 provided on a side surface of the lower pack frame 1100. Here, the lower pack frame 1100 and the upper pack frame 1200 may be coupled to each other by a method such as welding to seal the interior of the battery pack 1000. High-temperature venting gas discharged from the battery modules 100 in the space between the lower pack frame 1100 and the upper pack frame 1200 may be discharged to the outside through the venting part 2000.

One or more battery modules according to an embodiment of the present disclosure described above may be mounted together with various control and protection systems such as a battery management system (BMS), a battery disconnect unit (BDU), and a cooling system, to form a battery pack.

The battery module 100 or the battery pack 1000 may be applied to various devices, which include, for example, transportation vehicles such as electric bicycles, electric vehicles, and hybrids. However, without being limited thereto, the battery modules or the battery pack may be applied to various devices using secondary batteries.

In the embodiments above, expressions indicating directions such as "front," "rear," "left," "right," "up," and "down" have been used. These expressions are used only to facilitate the description, and may vary, for example, depending on the location of a target object or an observer.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

- 100:: battery module
- 110:: battery cell
- 120:: battery cell stack
- 130:: fixing frame
- 140:: module frame
- 160:: inlet
- 170:: outlet
- 210:: adhesive member
- 500:: bead surface
- 500B:: block-shaped bead surface
- 500L:: line-shaped bead surface

## Claims

1. A battery module, comprising:
a battery cell stack in which a plurality of battery cells including electrode leads are stacked;
a fixing frame including both side surface parts and a lower surface part so as to cover both side surfaces and a lower surface of the battery cell stack;
a module frame in which the battery cell stack and the fixing frame are housed; and
an inlet and an outlet for circulating a coolant into the interior of the module frame,
wherein the battery cell stack includes a first battery cell stack and a second battery cell stack arranged along a longitudinal direction in which the electrode leads protrude from the battery cells,
wherein the lower surface part of the fixing frame includes a bead surface, with the bead surface being provided with an adhesive member that abuts against the lower ends of the first battery cell stack and the second battery cell stack, and
wherein the first battery cell stack and the second battery cell stack are fixed to the fixing frame by the adhesive member.

2. The battery module according to claim 1,
wherein the first battery cell stack and the second battery cell stack are located between the inlet and the outlet.

3. The battery module according to claim 1,
wherein the inlet, the first battery cell stack, the second battery cell stack, and the outlet are sequentially located along the longitudinal direction, which is perpendicular to the direction between the both side surface parts of the fixing frame.

4. The battery module according to claim 1,
wherein the bead surface is an area protruding in the direction in which the battery cell stack is located from the lower surface part, and
an area other than the bead surface among the lower surface part of the fixing frame is a flow path through which a coolant flows.

5. The battery module according to claim 1,
wherein the pattern of the bead surface is formed so that, based on each of the battery cells, an area of 20% or more and 40% or less of the lower surface of the battery cell makes contact with the adhesive member.

6. The battery module according to claim 1,
wherein the bead surface includes at least one line-shaped bead surface, and
the line-shaped bead surface has a diagonal area that extends obliquely by forming an acute angle to the longitudinal direction.

7. The battery module according to claim 6,
wherein the bead surface includes a block-shaped bead surface.

8. The battery module according to claim 7,
wherein the line-shaped bead surface is formed in a plurality of numbers, and
the block-shaped bead surface is located between the line-shaped bead surfaces.

9. The battery module according to claim 7,
wherein the block-shaped bead surface is located between the line-shaped bead surface and the side surface part of the fixing frame.

10. The battery module according to claim 1,
wherein the bead surface comprises:
a first bead formed to extend in the longitudinal direction;
a second bead formed to extend in the longitudinal direction;
a third bead located between the first bead and the second bead;
a fourth bead located between a side surface part closer to the first bead among both side surface parts of the fixing frame, and the first bead; and
a fifth bead located between a side surface part closer to the second bead among both side surface parts of the fixing frame, and the second bead.

11. The battery module according to claim 10,
wherein the third bead is located in the center with respect to the both side surface parts of the fixing frame, and
the first bead and the second bead are symmetrical with respect to the third bead.

12. The battery module according to claim 10,
wherein the third bead is located in the center with respect to the both side surface parts of the fixing frame, and
the fourth bead and the fifth bead are symmetrical with respect to the third bead.

13. A battery pack comprising the battery module according to claim 1.
